# EUROPEAN PATENT SPECIFICATION

(11) **EP 3 272 176 B1**
(45) Date of publication and mention of the grant of the patent: **06.10.2021**
(21) Application number: 16716921.8
(22) Date of filing: 16.03.2016
(51) Int. Cl.: H04W 74/08

(54) **LISTEN-BEFORE-TALK FOR MULTI-CARRIER OPERATION IN UNLICENSED SPECTRUM**
LISTEN-BEFORE-TALK FÜR MEHRTRÄGERBETRIEB IN UNLIZENZIERTEM SPEKTRUM
ÉCOUTE AVANT TRANSMISSION POUR OPÉRATION À PORTEUSES MULTIPLES DANS UN SPECTRE SANS LICENCE

(30) Priority: 17.03.2015 US 201562134479 P
(43) Date of publication of application: 24.01.2018
(73) Proprietor: Telefonaktiebolaget LM Ericsson (PUBL), 164 83 Stockholm (SE)
(72) Inventor: LARSSON, Daniel, SE-112 18 Stockholm (SE); MUKHERJEE, Amitav, California 94538 (US); KOORAPATY, Havish, Saratoga, California 95070 (US); CHENG, Jung-Fu, Fremont, California 94539 (US); FALAHATI, Sorour, SE-112 29 Stockholm (SE); YANG, Yu, SE-170 62 Solna (SE)
(74) Representative: Ericsson
(86) International application number: PCT/SE2016/050216
(87) International publication number: WO 2016/148632

(56) References cited:
- US-A1- 2013 322 279
- US-A1- 2015 049 715
- US-A1- 2015 071 220

## Description

### TECHNICAL AREA

Embodiments herein relate to telecommunications and/or data communications in general and in particular to a method and a first communication device for operating on at least two carriers that are accessed by a Listen-Before-Talk procedure.

### BACKGROUND

The 3GPP initiative "Licensed-Assisted Access" (LAA) intends to allow LTE equipment to also operate in the unlicensed 5 GHz radio spectrum. The unlicensed 5 GHz spectrum is used as a complement to the licensed spectrum. Accordingly, devices connect in the licensed spectrum (primary cell or PCell) and use carrier aggregation to benefit from additional transmission capacity in the unlicensed spectrum (secondary cell or SCell). To reduce the changes required for aggregating licensed and unlicensed spectrum, the LTE frame timing in the primary cell is simultaneously used in the secondary cell.

Regulatory requirements, however, may not permit transmissions in the unlicensed spectrum without prior channel sensing. Since the unlicensed spectrum may be shared with other radios of similar or dissimilar wireless technologies, a so called listen-before-talk (LBT) method needs to be applied. Today, the unlicensed 5 GHz spectrum is mainly used by equipment implementing the IEEE 802.11 Wireless Local Area Network (WLAN) standard. This standard is known under its marketing brand "Wi-Fi."

In Europe, the LBT procedure is under the scope of EN 301.893 regulation. For LAA to operate in the 5GHz spectrum the LAA LBT procedure shall conform to requirements and minimum behaviors set forth in EN 301.893. However, additional system designs and steps are needed to ensure coexistence of Wi-Fi and LAA with EN 301.893 LBT procedures.

An example of relevant prior art is US8774209B2, "Apparatus and method for spectrum sharing using listen-before-talk with quiet periods," where LBT is adopted by frame-based OFDM systems to determine whether the channel is free prior to transmission. A maximum transmission duration timer is used to limit the duration of a transmission burst, and is followed by a quiet period. In contrast, this disclosure focuses on load-based LBT, and is designed to ensure fair coexistence with other radio access technologies such as Wi-Fi while also satisfying EN 301.893 regulations.

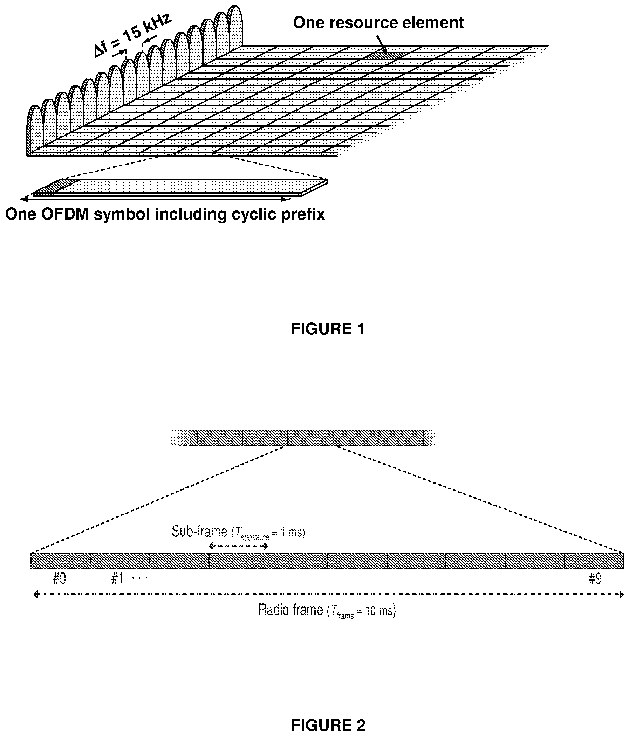

LTE uses OFDM in the downlink and DFT-spread OFDM (also referred to as single-carrier FDMA aka SC-FDMA) in the uplink. The basic LTE downlink physical resource can thus be seen as a time-frequency grid as illustrated in **Figure 1****,** where each resource element corresponds to one OFDM subcarrier during one OFDM symbol interval. The uplink subframe has the same subcarrier spacing as the downlink and the same number of SC-FDMA symbols in the time domain as OFDM symbols in the downlink.

In the time domain, LTE downlink transmissions are organized into radio frames of 10 ms, each radio frame consisting of ten equally-sized subframes of length Tsubframe = 1 ms as shown in **Figure 1****.** For normal cyclic prefix, one subframe consists of 14 OFDM symbols. The duration of each symbol is approximately 71.4 µs.

Furthermore, the resource allocation in LTE is typically described in terms of resource blocks, where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth.

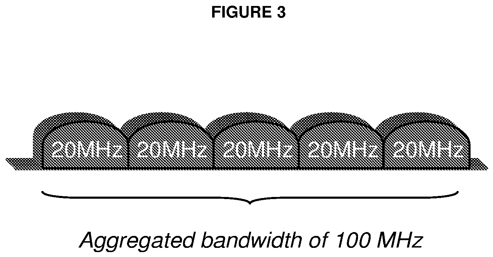

Downlink transmissions are dynamically scheduled, i.e., in each subframe the base station transmits control information about which terminals data is transmitted to and upon which resource blocks the data is transmitted, in the current downlink subframe. This control signaling is typically transmitted in the first 1, 2, 3 or 4 OFDM symbols in each subframe and the number n = 1, 2, 3 or 4 is known as the Control Format Indicator (CFI). The downlink subframe also contains common reference symbols, which are known to the receiver and used for coherent demodulation of e.g. the control information. A downlink system with CFI = 3 OFDM symbols as control is illustrated in **Figure 3****.**

From LTE Rel-11 onwards, above described resource assignments can also be scheduled on the enhanced Physical Downlink Control Channel (EPDCCH). For Rel-8 to Rel-10 only Physical Downlink Control Channel (PDCCH) is available.

The reference symbols shown in the above **Figure 3** are the cell specific reference symbols (CRS) and are used to support multiple functions including fine time and frequency synchronization and channel estimation for certain transmission modes.

### Physical Downlink Control Channel (PDCCH) and Enhanced PDCCH (EPDCCH)

The PDCCH/EPDCCH is used to carry downlink control information (DCI) such as scheduling decisions and power-control commands. More specifically, the DCI includes:
- Downlink scheduling assignments, including PDSCH resource indication, transport format, hybrid-ARQ information, and control information related to spatial multiplexing (if applicable). A downlink scheduling assignment also includes a command for power control of the PUCCH used for transmission of hybrid-ARQ acknowledgements in response to downlink scheduling assignments.
- Uplink scheduling grants, including PUSCH resource indication, transport format, and hybrid-ARQ-related information. An uplink scheduling grant also includes a command for power control of the PUSCH.
- Power-control commands for a set of terminals as a complement to the commands included in the scheduling assignments/grants.

One PDCCH/EPDCCH carries one DCI message containing one of the groups of information listed above. As multiple terminals can be scheduled simultaneously, and each terminal can be scheduled on both downlink and uplink simultaneously, it is advantageous to have a possibility to transmit multiple scheduling messages within each subframe. Each scheduling message is transmitted on separate PDCCH/EPDCCH resources, and consequently there are typically multiple simultaneous PDCCH/EPDCCH transmissions within each subframe in each cell. Furthermore, to support different radio-channel conditions, link adaptation can be used, where the code rate of the PDCCH/EPDCCH is selected by adapting the resource usage for the PDCCH/EPDCCH, to match the radio-channel conditions.

### Carrier aggregation

The LTE Rel-10 standard supports bandwidths larger than 20 MHz. One important requirement on LTE Rel-10 is to assure backward compatibility with LTE Rel-8. This should also include spectrum compatibility. That would imply that an LTE Rel-10 carrier, wider than 20 MHz, should appear as a number of LTE carriers to an LTE Rel-8 terminal. Each such carrier can be referred to as a Component Carrier (CC). In particular for early LTE Rel-10 deployments it can be expected that there will be a smaller number of LTE Rel-10-capable terminals compared to many LTE legacy terminals. Therefore, it is necessary to assure an efficient use of a wide carrier also for legacy terminals, i.e. that it is possible to implement carriers where legacy terminals can be scheduled in all parts of the wideband LTE Rel-10 carrier. The straightforward way to obtain this would be by means of Carrier Aggregation (CA). CA implies that an LTE Rel-10 terminal can receive multiple CC, where the CC have, or at least the possibility to have, the same structure as a Rel-8 carrier. CA is illustrated in **Figure 4**. A CA-capable UE is assigned a primary cell (PCell) which is always activated, and one or more secondary cells (SCells) which may be activated or deactivated dynamically.

The number of aggregated CC as well as the bandwidth of the individual CC may be different for uplink and downlink. A symmetric configuration refers to the case where the number of CCs in downlink and uplink is the same whereas an asymmetric configuration refers to the case that the number of CCs is different. It is important to note that the number of CCs configured in a cell may be different from the number of CCs seen by a terminal: A terminal may for example support more downlink CCs than uplink CCs, even though the cell is configured with the same number of uplink and downlink CCs.

In addition, a key feature of carrier aggregation is the ability to perform cross-carrier scheduling. This mechanism allows a (E)PDCCH on one CC to schedule data transmissions on another CC by means of a 3-bit Carrier Indicator Field (CIF) inserted at the beginning of the (E)PDCCH messages. For data transmissions on a given CC, a UE expects to receive scheduling messages on the (E)PDCCH on just one CC ― either the same CC, or a different CC via cross-carrier scheduling; this mapping from (E)PDCCH to PDSCH is also configured semi-statically.

### Wireless Local Area Network

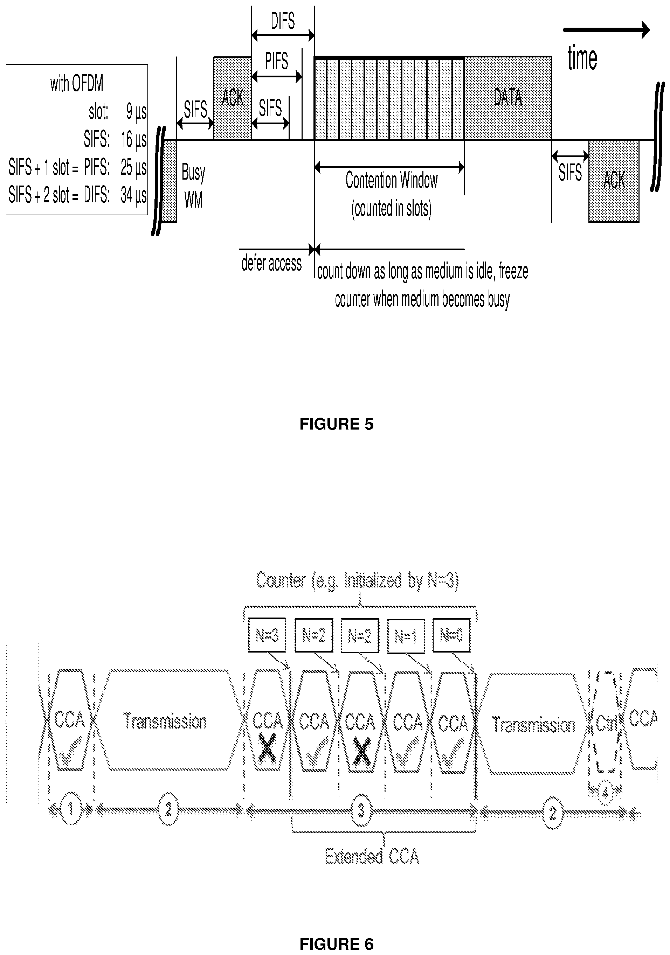

In typical deployments of WLAN, carrier sense multiple access with collision avoidance (CSMA/CA) is used for medium access. This means that the channel is sensed by performing a clear channel assessment (CCA), and a transmission is initiated only if the channel is declared as Idle. In case the channel is declared as Busy, the transmission is essentially deferred until the channel is deemed to be Idle. When the range of several APs using the same frequency overlap, this means that all transmissions related to one AP might be deferred in case a transmission on the same frequency to or from another AP that is within range can be detected. Effectively, this means that if several APs are within range, they will have to share the channel in time, and the throughput for the individual APs may be severely degraded. A general illustration of the listen before talk (LBT) mechanism is shown in **Figure 5****.**

After a Wi-Fi station A transmits a data frame to a station B, station B shall transmit the ACK frame back to station A with a delay of 16 µs. Such an ACK frame is transmitted by station B without performing a LBT operation. To prevent another station interfering with such an ACK frame transmission, a station shall defer for a duration of 34 µs (referred to as DIFS) after the channel is observed to be occupied before assessing again whether the channel is occupied.

Therefore, a station that wishes to transmit first performs a CCA by sensing the medium for a fixed duration DIFS. If the medium is idle then the station assumes that it may take ownership of the medium and begin a frame exchange sequence. If the medium is busy, the station waits for the medium to go idle, defers for DIFS, and waits for a further random backoff period.

To further prevent a station from occupying the channel continuously and thereby prevent other stations from accessing the channel, it is specified for a station wishing to transmit again after a transmission is completed to perform a random backoff.

The PIFS is used to gain priority access to the medium, and is shorter than the DIFS duration. Among other cases, it can be used by STAs operating under PCF, to transmit Beacon Frames with priority. At the nominal beginning of each Contention-Free Period (CFP), the PC shall sense the medium. When the medium is determined to be idle for one PIFS period (generally 25 µs), the PC shall transmit a Beacon frame containing the CF Parameter Set element and a delivery traffic indication message element.

### Load-based clear channel assessment in Europe regulation EN 301.893

For a device not utilizing the Wi-Fi protocol, EN 301.893, v. 1.7.1 provides the following requirements and minimum behavior for the load-based clear channel assessment.
1) Before a transmission or a burst of transmissions on an Operating Channel, the equipment shall perform a Clear Channel Assessment (CCA) check using "energy detect". Using energy detect may comprise that the equipment shall observe the Operating Channel(s) for the duration of the CCA observation time which shall be not less than 20 µs. Observing the operating channel may comprise detecting a power and/or energy on the operating channel. The CCA observation time used by the equipment shall or may be declared by the manufacturer. The Operating Channel shall be considered occupied if the energy level in the channel exceeds the threshold corresponding to the power level given in point 5 below. If the equipment finds the channel to be clear, it may transmit immediately (see point 3 below).
2) If the equipment finds an Operating Channel occupied, it shall not transmit in that channel. The equipment shall perform an Extended CCA check in which the Operating Channel is observed for the duration of a random factor N multiplied by the CCA observation time. N defines the number of clear idle slots resulting in a total Idle Period that need to be observed before initiation of the transmission. The value of N shall be randomly selected in the range 1...q every time an Extended CCA is required and the value stored in a counter. The value of q is selected by the manufacturer in the range 4...32. The counter is decremented every time a CCA slot is considered to be "unoccupied". When the counter reaches zero, the equipment may transmit.
   NOTE: For equipment having simultaneous transmissions on multiple (adjacent or non-adjacent) operating channels, the equipment is allowed to continue transmissions on other Operating Channels providing the CCA check did not detect any signals on those channels.
3) The total time that an equipment makes use of an Operating Channel is the Maximum Channel Occupancy Time which shall be less than (13/32) × q ms, with q as defined in point 2 above, after which the device shall perform the Extended CCA described in point 2 above.
4) The equipment, upon correct reception of a packet which was intended for this equipment, can skip CCA and immediately (see note 4) proceed with the transmission of management and control frames (e.g. ACK and Block ACK frames). A consecutive sequence of transmissions by the equipment, without it performing a new CCA, shall not exceed the Maximum Channel Occupancy Time as defined in point 3 above.
   NOTE: For the purpose of multi-cast, the ACK transmissions (associated with the same data packet) of the individual devices are allowed to take place in a sequence
5) The energy detection threshold for the CCA shall be proportional to the maximum transmit power (PH) of the transmitter: for a 23 dBm e.i.r.p. transmitter the CCA threshold level (TL) shall be equal or lower than -73 dBm/MHz at the input to the receiver (assuming a 0 dBi receive antenna). For other transmit power levels, the CCA threshold level TL shall be calculated using the formula: TL = -73 dBm/MHz + 23 - PH (assuming a 0 dBi receive antenna and PH specified in dBm e.i.r.p.).

An example to illustrate the EN 301.893 is provided in **Figure 6****.**

### Licensed assisted access (LAA) to unlicensed spectrum using LTE

Up to now, the spectrum used by LTE is dedicated to LTE. This has the advantage that an LTE system does not need to care about coexistence with other non-3GPP radio access technologies in the same spectrum and spectrum efficiency can be maximized. However, the spectrum allocated to LTE is limited which cannot meet the ever increasing demand for larger throughput from applications/services. Therefore, a new study item has been initiated in 3GPP Rel-13 on extending LTE to exploit unlicensed spectrum in addition to licensed spectrum.

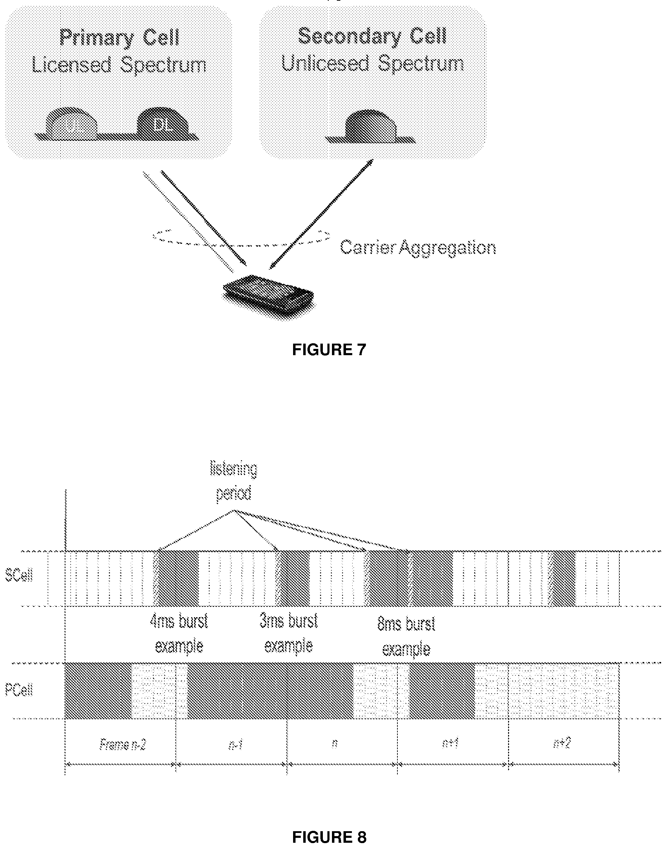

With Licensed-Assisted Access to unlicensed spectrum, as shown in **Figure 7****,** a UE is connected to a PCell in the licensed band and one or more SCells in the unlicensed band. In this application we denote a secondary cell in unlicensed spectrum as LAA secondary cell (LAA SCell). The LAA SCell may operate in DL-only mode or operate with both UL and DL traffic. Furthermore, in future scenarios the LTE nodes may operate in standalone mode in license-exempt channels without assistance from a licensed cell. Unlicensed spectrum can, by definition, be simultaneously used by multiple different technologies. Therefore, LAA as described above needs to consider coexistence with other systems such as IEEE 802.11 (Wi-Fi).

To coexist fairly with the Wi-Fi system, transmission on the SCell shall conform to LBT protocols in order to avoid collisions and causing severe interference to on-going transmissions. This includes both performing LBT before commencing transmissions, and limiting the maximum duration of a single transmission burst. The maximum transmission burst duration is specified by country and region-specific regulations, for e.g., 4ms in Japan and 13ms according to EN 301.893. An example in the context of LAA is shown in **Figure 8** with different examples for the duration of a transmission burst on the LAA SCell constrained by a maximum allowed transmission duration of 4 ms.

### Multi-carrier operation

The use of LTE carrier aggregation (CA), introduced since Rel-10, offers means to increase the peak data rate, system capacity and user experience by aggregating radio resources from multiple carriers that may reside in the same band or different band.

In Rel-13, LAA (Licensed-Assisted Access) has attracted a lot of interest in extending the LTE carrier aggregation feature towards capturing the spectrum opportunities of unlicensed spectrum in the 5GHz band. WLAN operating in the 5GHz band nowadays already supports 80MHz in the field and 160MHz is to follow in Wave 2 deployment of IEEE 802.11ac. Enabling the utilization of multi-carrier operation on unlicensed carrier using LAA is deemed necessary as further CA enhancements. The extension of the CA framework beyond 5 carriers has been started in LTE Rel-13. The objective is to support up to 32 carriers in both UL and DL.

### Problems with existing solutions

In current LTE, licensed carriers can be aggregated and utilized for data transmission to boost the throughput. Due to the introduction of LAA in 3GPP Rel-13, there is a need to support multi-carrier operation on unlicensed carriers. Hence, the LBT design should be carefully considered for multi-carrier operation. One existing solution is that the node does LBT for each carrier on unlicensed spectrum in order to access the channel. If the LBT succeeds on one carrier, the node transmits on this carrier. The problem with this solution is that each carrier may end up with different intended transmit time due to the random backoff of LBT procedure on each carrier and different interference levels on each carrier.

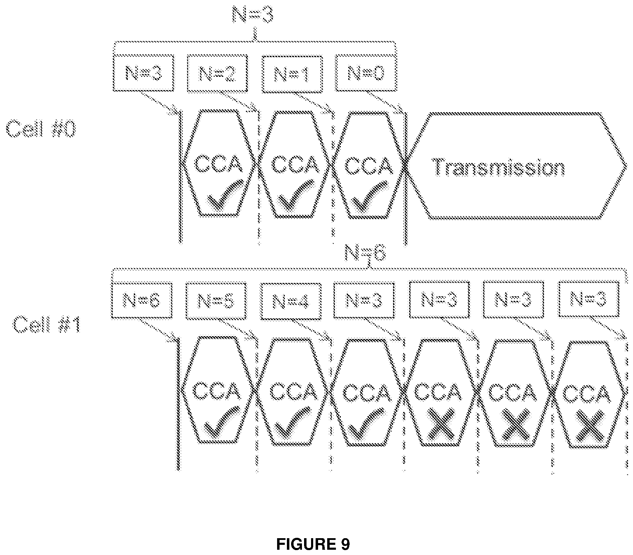

An example is given in **Figure 9** to illustrate this problem. Denote two carriers for a node as cell #0 and cell #1. Cell #0 and cell #1 are doing LBT with different random number N to access the channel. Since the random number N is smaller for cell #0 and hence LBT may succeed earlier on cell #0 than on cell #1 which is still counting down the random number. Then cell #0 starts the transmission which may interfere with the LBT procedure in cell #1. The LBT procedure may be sensitive to detected energy power of -62dBm, which is the threshold for considering the channel to be busy. The leakage from a neighboring unlicensed carrier transmission may be above this threshold. However, this leakage is quite weak compared to the transmitting power so the interference when transmitting on multiple unlicensed carriers simultaneously is not expected to be an issue.

Due to the interference caused by leakage from cell #0, which interferes with the LBT procedure in cell #1, cell#1 will never get a chance to transmit when cell #0 transmits. As a result, only one carrier is utilized for transmission and it is very unlikely to operate on multi-carrier on unlicensed spectrum. With an increased number of carriers being aggregated, the probability that all carriers will be able to be utilized further goes down. This solution limits the utilization of multi-carrier operation on unlicensed carrier.

Document US 2013/322279 describes a method for sensing measurement gap scheduling including allocating a new supplementary carrier in a license-exempt spectrum by a radio resource management (RRM) entity in an evolved Node B (eNB), configuring a local cognitive sensing entity in the eNB by the RRM entity, configuring a wireless transmit/receive unit (WTRU) for cognitive sensing through radio resource control (RRC) signaling, the RRC signaling being generated by the eNB, configuring a local cognitive sensing entity at the WTRU by a dynamic spectrum management (DSM) unit, and signaling a start and duration of a measurement gap to an enhanced sensing component.

Document US 2015/049715 describes methods, systems, and devices for clear channel assessments (CCAs) on multiple component carriers transmitted using an unlicensed spectrum.

Document US 2015/071220 describes management of transmitters for conditions of transmission uncertainty that arises in operating over non-guaranteed transmission carriers that are required to perform listen-before-talk (LBT) processes and guaranteed transmission carriers that are LBT-exempt.

### SUMMARY

It is an object of embodiments described herein to address at least some of the problems and issues outlined above. It is possible to achieve this object and others by using methods and apparatuses as defined in the following embodiments.

The invention is defined by the appended claims. According to a first aspect, a method for operating a first communication device (100) in a wireless communication system is disclosed. The first communication device (100) is configured to operate on least two carriers that are accessed by an LBT procedure. The method comprises performing (S1) synchronized LBT procedures by using a same starting time and detecting a power N times, wherein N indicates a plurality of times that an LBT procedure has to detect clear idle slots before accessing a carrier, on each of the at least two carriers, and accessing (S2) the carriers based on the result of the synchronized LBT procedures, wherein the LBT procedures are synchronized by using the same or equal random back-off value, N.

According to a third aspect, a first communication device (100) configured to operate on least two carriers that are accessed by an LBT procedure is disclosed. The first communication device (100) is adapted to perform synchronized LBT procedures by using a same starting time and detecting a power N times, wherein N indicates a plurality of times that an LBT procedure has to detect clear idle slots before accessing a carrier, on each of the least two carriers, and access the carriers based on the result of the synchronized LBT procedures, wherein the LBT procedures on each carrier apply equal random back-off value, N, to synchronize the access of the respective carriers on which the respective carriers on which the LBT procedures are performed.

The above communication devices and methods therein may be implemented and configured according to different optional embodiments to accomplish further features and benefits, to be described below.

One advantage is that utilization of multi-carrier operation on unlicensed carriers and/or carriers accessed by LBT is facilitated and that a good contention between LAA LTE and LAA LTE, and between LAA LTE and other technologies for channel access on an unlicensed carriers and/or carriers accessed by LBT, is achieved.

### BRIEF DESCRIPTION OF DRAWINGS

Figure 1 The LTE downlink physical resource
Figure 2 LTE time-domain structure
Figure 3 Normal downlink subframe
Figure 4 Carrier aggregation.
Figure 5 Illustration of listen before talk (LBT) in Wi-Fi.
Figure 6 Illustration of listen before talk (LBT) in EN 301.893.
Figure 7 CA-capable UE configured with one LAA SCell.
Figure 8 Licensed-assisted access (LAA) to unlicensed spectrum using LTE carrier aggregation and listen-before-talk to ensure good coexistence with other unlicensed band technologies.
Figure 9 Problem with existing solution of channel access for multi-carrier operation on unlicensed carrier
Figure 10 Coordinated LBT for multi-carrier operation
Figure 11 A flow chart for a method performed in a first communication device
Figure 12 A flow chart for a method performed in a first communication device
Figure 13 A flow chart for a method performed in a first communication device
Figure 14 A first communication device
Figure 15 A first communication device

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

In the context of this disclosure some basic concepts are defined.

A method for operating a first communication device (100) may be performing load based Listen Before Talk procedure according to EN 301.893.

A quick CCA (clear channel assessment) may be a Clear Channel Assessment (CCA) check using "energy detect" as described above. The equipment and/or first communication device shall observe the Operating Channel(s) and/or carriers for the duration of the CCA observation time. Observing the Operating Channel(s) and/or carrier(s) may comprise detecting a power and/or energy on said Operating Channel(s) and/or carrier(s). A quick CCA may also be a single CCA check with a modified observation time.

A first communication device (100) may be a UE and/or a D2D device and/or an MTC (Machine Type Communication) device and/or a laptop or a network node. A network node may be e.g. a base station and/or an Access Point and/or an eNB in eUTRAN and/or a NodeB in UTRAN.

A second communication device may be a UE and/or a D2D device and/or an MTC (Machine Type Communication) device and/or a laptop or a network node.

A terminal in this disclosure is used interchangeably with UE.

A wireless communication network may be a WLAN according to IEEE and/or eUTRAN and/or UTRAN network according to 3GPP.

A carrier that is accessed by an LBT procedure may be accessed after checking if the carrier is free and/or idle. One example of how this is done is specified in EN 301.893.

Performing an LBT procedure may be and/or comprise following some rules to decide whether a certain carrier is available for access or not, e.g. decide whether the carrier is free and/or idle. There may be one LBT procedure per carrier that is accessed by LBT.

Accessing an LBT carrier may comprise transmitting on said carrier.

A status of an LBT procedure may be e.g. a number of successful CCA and/or a number of unsuccessful CCA attempts and/or remaining number of CCA attempts and /or remaining time before accessing the carrier and/or starting time of the LBT procedure and/or transmission length, and/or CCA observation time and/or Maximum Channel Occupancy Time and/or whether access to the carrier is allowed.

The result of an LBT procedure may be e.g. allowed to access the carrier for which the LBT procedure was performed or not allowed to access the carrier for which the LBT procedure was performed.

A carrier accessed by LBT may be an unlicensed carrier and/or a carrier in a shared frequency spectrum.

A starting time in an LBT procedure may be defined as the time when the first communication device (100) wants to: transmit something on; and/or access; and/or starts sensing; a carrier which is accessed with LBT.

A back-off value may e.g. be "N" as defined in EN 301.893 above, where "N" defines the number of clear idle slots resulting in a total Idle Period that need to be observed before initiation of the transmission. "N" in e.g. **Figure 6** and **Figure 9** are back-off values. The back-off value may indicate how many successful CCAs the procedure has to measure and/or detect before it may access the carrier.

A channel in this disclosure may be defined as occupying a subset of the bandwidth of a carrier or as occupying the whole carrier. A channel may be an operating channel.

A description of the proposed LBT protocols for multi-carrier operation on carriers accessed by LBT procedure is given below. The proposed embodiments are applicable for both DL and UL transmissions, for both FDD and TDD systems. The LBT protocols in this disclosure are applicable to both LAA LTE and standalone LTE operation in license-exempt channels.

In a first embodiment, when there are multiple unlicensed carriers configured or scheduled for a node and/or a first communication device, the node and/or first communication device does LBT independently for each carrier with the same starting time and same random number in the back-off procedure of LBT. If LBT on one carrier succeeds, the node and/or first communication device transmits on this carrier. In one exemplary embodiment, the starting time or the random back-off number is determined by said node and/or a first communication device. In a second exemplary embodiment, the starting time or the random back-off number is provided to said node by a second node and/or communication device.

In an example useful for understanding the invention, when there are multiple unlicensed carriers configured or scheduled for a node and/or a first communication device, it performs LBT on one carrier first. A short period before the intended transmit time, the node and/or first communication device performs a quick CCA check on the other carriers. If a quick CCA succeeds, the node and/or first communication device transmits on the carriers which have a successful LBT or quick CCA. If a quick CCA fails for one or more carriers, the node and/or first communication device transmits only on the carriers which has a successful LBT and/or quick CCA.
- In one example, the node and/or first communication device randomly selects one carrier from said multiple unlicensed carriers configured or scheduled for the node and/or first communication device to start the LBT.
- In a second example, the node and/or first communication device determines the carrier to perform LBT based on channel observation or measurements such as average received power levels, channel activity levels, frequency of observing received power exceeding the CCA threshold and so forth. In one non-limiting embodiment, the node and/or first communication device selects the carrier with higher received interference power. In a second non-limiting embodiment, the node and/or first communication device selects the carrier the higher frequency of observing received power exceeding the CCA threshold.
- In a third example, the node and/or first communication device determines the carrier to perform LBT based on detection of specific signals from co-channel operation network. In one embodiment, the node and/or first communication device selects the carrier which is used by another co-channel operation network as a primary channel. As one non-limiting example, the co-channel operation network is an IEEE 802.11 network and the specific signal is a beacon frame. The first node performs LBT on the same carrier as the primary carrier of another technology to achieve a good co-existence with another technology.
- In yet another example, the node and/or first communication device receives the information from a second node regarding the carrier choice to perform LBT. Said second node determines said carrier based on channel observation or measurements such as average received power levels, channel activity levels, frequency of observing received power exceeding the CCA threshold and so forth as taught in the above. Said second node can also determine said carrier based on detection of specific signals from co-channel operation network. In a further example, the first node accessing the channel is an eNB. The second node is a UE connected to the eNB, which detects the primary carrier of another technology (e.g. Wi-Fi) on the shared unlicensed spectrum and reports the information to eNB. The eNB performs the LBT on the same carrier as the primary carrier of another technology to achieve a good co-existence on the shared unlicensed spectrum.

In a second embodiment, when there are multiple unlicensed carriers configured or scheduled for the node and/or a first communication device, it performs LBT on all the carriers simultaneously. When one or more carriers have come closely to the end of the LBT, i.e., a short period before the intended transmit time, the node and/or first communication device checks the LBT status on other carriers, e.g., the value of random counter, and takes action based on the counter status on other carriers:
- Alt A: If the counter on the carrier is within a first predefined range (e.g. Ci<=1), the node and/or first communication device waits for the LBT on this carrier. If LBT on this carrier succeeds within a predetermined short time period T, the node and/or first communication device transmits on all the carriers which have successful LBT. If LBT on this carrier doesn't succeed within a predetermined short time period T, the node and/or first communication device doesn't transmit on this carrier and instead only transmits on the carriers which have successful LBT.
- Alt B: If the counter on the carrier is within a second predefined range (e.g. Ci<=2), the node and/or first communication device does a quick CCA check on this carrier and transmits on the carrier only if quick CCA succeeds.
- Alt C: If the counter on the carrier is not within a predefined range (e.g. Ci>=2), the node and/or first communication device doesn't do any CCA check and doesn't transmit on the carrier, i.e., the node and/or first communication device only transmits on the carriers which have successful LBT.

In one example of this embodiment, the node and/or first communication device starts LBT on all the carriers simultaneously with the same random number.

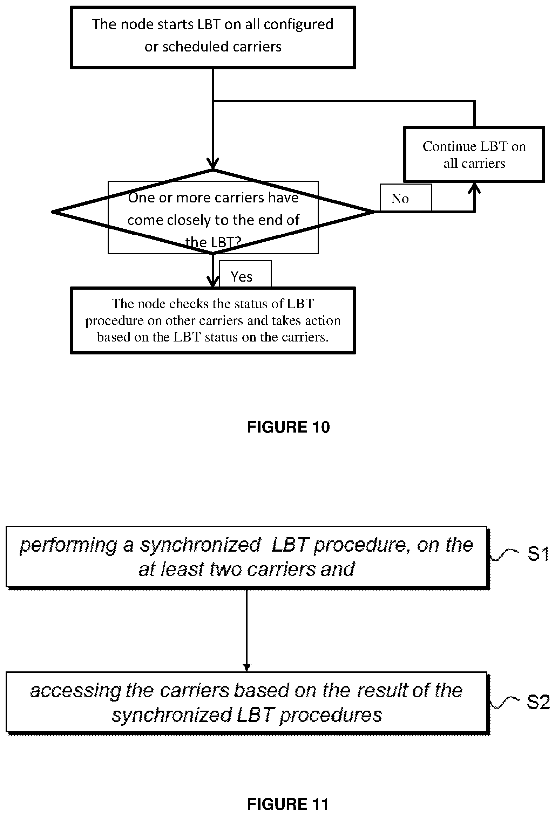

An example of a procedure, performed by a first communication device (100) when the solution is employed, will now be described with reference to the flow chart in **Figure 11****.** In this procedure, the first communication device (100) is configured to operate on least two carriers that are accessed by an LBT procedure.

A first method step (S1) illustrates that LBT procedures are synchronized on the at least two carriers. LBT procedures being synchronized, meaning that the LBT procedures on each carrier apply equal starting times and/or equal back-off values in order to synchronize the access of the respective carriers on which the LBT procedures are performed.

An example of an LBT procedure applying a starting time is illustrated in **Figure 5** and **Figure 6****.**

In a second method step (S2) the carriers are accessed based on the result of the synchronized LBT procedures. If several carriers are accessed in a synchronized manner, the risk for introducing interference on other ongoing LBT procedures in the first communication device (100) is reduced.

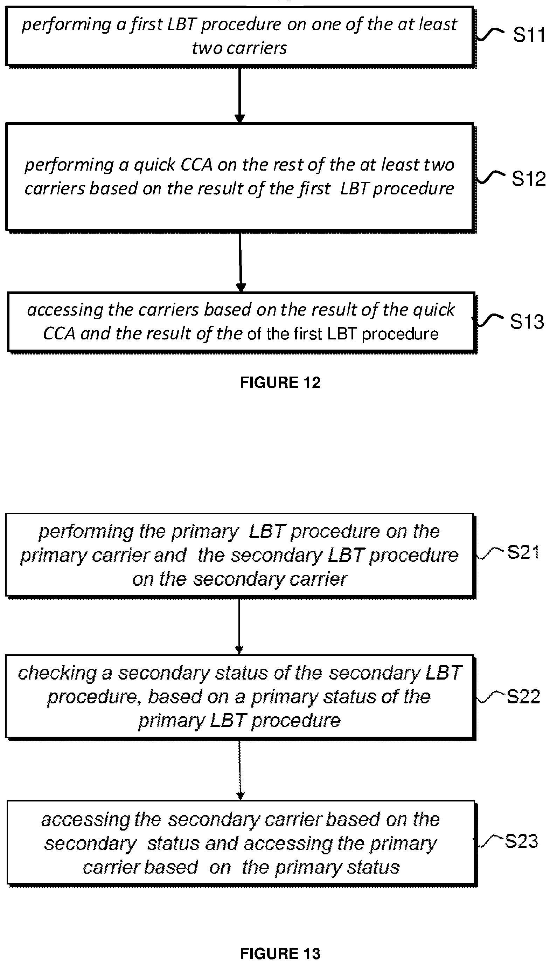

Another example of a procedure, useful for understanding the invention, performed by a first communication device (100), will now be described with reference to the flow chart in **Figure 12****.** In this procedure, the first communication device (100) is configured to operate on least two carriers that are accessed by an LBT procedure.

A first method step (S11) illustrates that a first LBT procedure is performed on one of the at least two carriers. If the first LBT procedure is getting close in time to access a carrier it may be beneficial - e.g. in order to increase transmission bandwidth - to check whether the other carriers may provide access before accessing the carrier according to the first LBT procedure.

In the second method step (S12), a quick CCA is performed on the rest of the at least two carriers based on the result of the first LBT procedure.

In the third method step (S13), the carriers are access based on the result of the quick CCA and the result of the first LBT procedure.

Yet another example of a procedure, useful for understanding the invention, performed by a first communication device (100), will now be described with reference to the flow chart in **Figure 13****.** In this procedure, the first communication device (100) is configured to operate on a primary carrier accessed by a primary LBT procedure and a secondary carrier accessed by a secondary LBT procedure.

A first method step (S21) illustrates that the first communication device (100) performs the primary LBT procedure on the primary carrier and the secondary LBT procedure on the secondary carrier.

The second method step (S22) shows that a secondary status is checked, based on a primary status of the primary LBT procedure. In this case, it may be that the primary LBT procedure is getting close in time to access the primary carrier. Therefore, in order to avoid creating interference on the secondary carrier for which the first communication device (100) is performing a secondary LBT procedure, a secondary status for the secondary LBT procedure is checked in order to decide whether to delay the carrier access on the primary carrier in case the secondary carrier is expected to get access to the secondary carrier soon. The status for the secondary LBT procedures is checked by e.g. checking the current value of "N", where "N" may be a back-off counter.

In the third method step (23) it is illustrated that the secondary carrier is accessed based on the secondary status and that the primary carrier is accessed based on the primary status.

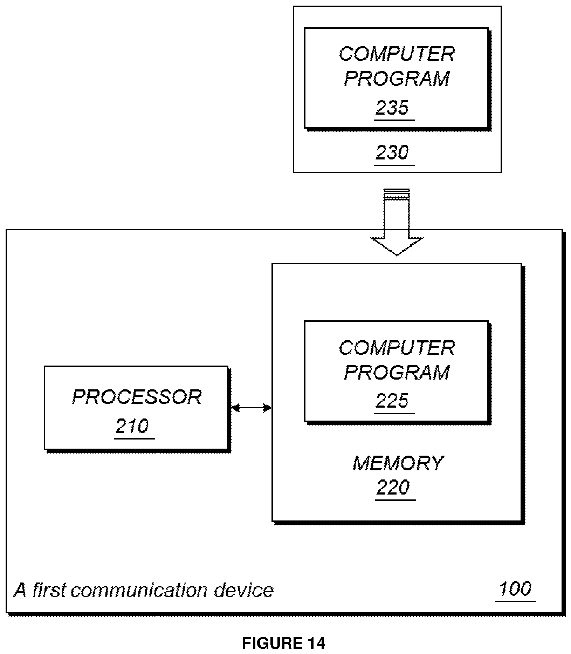

With reference to **Figure 14****,** there is also disclosed a first computer program (225, 235) comprising instructions, which when executed on a processing circuitry (210) cause the processing circuitry (210) to carry out and/or control the methods in the first communication device (100) as described herein.

There is also disclosed a first carrier (230) containing the first computer program wherein the carrier is one of an electronic signal, optical signal, radio signal, computer or processing circuitry readable storage medium.

In one embodiment, a first communication device (100) is disclosed wherein the first communication device (100) may comprise a performing module (101) configured to perform (S1) synchronized LBT procedures, on the at least two carriers and an accessing module (102) configured to access (S2) the carriers based on the result of the synchronized LBT procedures.

In another example useful for understanding the invention,, a first communication device (100) is disclosed wherein the first communication device (100) may comprise a performing module (111) configured to perform (S11) a first LBT procedure on one of the at least two carriers and another performing module (112) configured to perform (S12) a quick CCA on the rest of the at least two carriers based on the result of the first LBT procedure and an accessing module (113) configured to access (S13) the carriers based on the result of the quick CCA and the result of the first LBT procedure.

In yet another example useful for understanding the invention,, a first communication device (100) is disclosed wherein the first communication device (100) may comprise a performing module (121) configured to perform (S21) the primary LBT procedure on the primary carrier and the secondary LBT procedure on the secondary carrier and a checking module (122) configured to check (S22) a secondary status of the secondary LBT procedure, based on a primary status of the primary LBT procedure and an accessing module (123) configured to access (S23) the secondary carrier based on the secondary status and accessing the primary carrier based on the primary status.

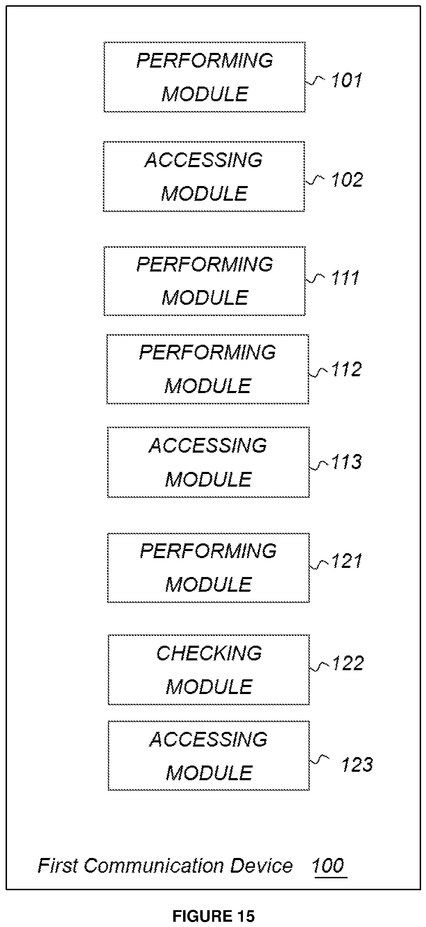

A schematic view of a first communication device (100) is illustrated in **Figure 15****.**

In this particular example, at least some of the steps, functions, procedures, modules and/or blocks described herein are implemented in a computer program 225; 235, which is loaded into the memory 220 for execution by processing circuitry including one or more processors 210. The processor(s) 210 and memory 220 are interconnected to each other to enable normal software execution. An optional input/output device may also be interconnected to the processor(s) and/or the memory to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

In yet another example, the proposed technology also provides a carrier 220; 230 comprising the computer program 225; 235, wherein the carrier is one of an electronic signal, an optical signal, an electromagnetic signal, a magnetic signal, an electric signal, a radio signal, a microwave signal, or a computer-readable storage medium.

By way of example, the software or computer program 225; 235 may be realized as a computer program product, which is normally carried or stored on a computer-readable medium 220; 230, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

Throughout this disclosure, the word "comprise" or "comprising" has been used in a non-limiting sense, i.e. meaning "consist at least of". Although specific terms may be employed herein, they are used in a generic and descriptive sense only and not for purposes of limitation. In particular, it should be noted that although terminology from 3GPP LTE has been used in this disclosure to exemplify the invention, this should not be seen as limiting the scope of the invention to only the aforementioned system. Other wireless systems, including LTE-A (or LTE-Advanced), UMTS, WiMax, and WILAN, may also benefit from exploiting the ideas covered within this disclosure.

TDD is referring to Time Division Duplex where uplink- and downlink carriers are separated in time as opposed to FDD (Frequency Division Duplex) where uplink- and downlink carriers are separated in frequency.

### ABBREVIATIONS

- CCA: Clear Channel Assessment
- DCF: Distributed Coordination Function
- DIFS: DCF Inter-frame Spacing
- DL: Downlink
- DRS: Discovery Reference Signal
- eNB: evolved NodeB, base station
- TTI: Transmission-Time Interval
- LAA: Licensed Assisted Access
- LBT: Listen Before Talk
- PDCCH: Physical Downlink Control Channel
- PIFS: PCF Inter-frame Spacing
- PUSCH: Physical Uplink Shared Channel
- QCI: QoS Class Identifier
- QoS: Quality of Service
- SCell: Secondary Cell
- SIFS: Short Inter-frame Spacing
- UE: User Equipment
- UL: Uplink

### REFERENCES

[1] US patent US8774209B2, "Apparatus and method for spectrum sharing using listen-before-talk with quiet periods,"
[2] 3GPP TS 36.211, V11.4.0 (2013-09), 3rd Generation Partnership Project; Technical Specification Group Radio Access Network; Evolved Universal Terrestrial Radio Access (E-UTRA); Physical Channels and Modulation, Release 11
[3] 3GPP TS 36.213, V11.4.0 (2013-09), 3rd Generation Partnership Project; Technical Specification Group Radio Access Network; Evolved Universal Terrestrial Radio Access (E-UTRA); Physical layer procedures, Release 11
[4] 3GPP TS 36.331, V11.5.0 (2013-09), 3rd Generation Partnership Project; Technical Specification Group Radio Access Network; Evolved Universal Terrestrial Radio Access (E-UTRA); Radio Resource Control (RRC), Release 11

## Claims

1. A method for operating a first communication device (100) in a wireless communication system, the first communication device (100) being configured to operate on at least two carriers that are accessed by a Listen-Before-Talk, LBT, procedure, the method comprises:
- performing (S1) synchronized LBT procedures by using a same starting time and detecting a power N times, wherein N indicates a plurality of times that an LBT procedure has to detect clear idle slots before accessing a carrier, on each of the at least two carriers; and
- accessing (S2) the carriers based on the result of the synchronized LBT procedures, wherein the LBT procedures are synchronized by using the same or equal random back-off value, N.

2. A first communication device (100) configured to operate on at least two carriers that are accessed by a Listen-Before-Talk, LBT, procedure, the first communication device (100) is adapted to:
- perform synchronized LBT procedures by using a same starting time and detecting a power N times, wherein N indicates a plurality of times that an LBT procedure has to detect clear idle slots before accessing a carrier, on each of the at least two carriers; and
- access the carriers based on the result of the synchronized LBT procedures, wherein the LBT procedures on each carrier apply equal random back-off value, N, to synchronize the access of the respective carriers on which the LBT procedures are performed.

## Patentansprüche

1. Verfahren zum Betreiben einer ersten Kommunikationsvorrichtung (100) in einem drahtlosen Kommunikationssystem, wobei die erste Kommunikationsvorrichtung (100) dazu konfiguriert ist, auf mindestens zwei Trägern zu arbeiten, auf die durch eine Listen-Before-Talk-Prozedur, LBT-Prozedur, zugegriffen wird, wobei das Verfahren umfasst:
- Durchführen (S1) synchronisierter LBT-Prozeduren unter Verwendung derselben Startzeit und N-maliges Erkennen einer Leistung, wobei N eine Vielzahl von Malen angibt, die eine LBT-Prozedur freie Leerlaufschlitze auf jedem der mindestens zwei Träger erkennen muss, bevor sie auf einen Träger zugreift; und
- Zugreifen (S2) auf die Träger basierend auf dem Ergebnis der synchronisierten LBT-Prozeduren, wobei die LBT-Prozeduren unter Verwendung des gleichen oder des gleichwertigen zufälligen Back-Off-Werts, N, synchronisiert sind.

2. Erste Kommunikationsvorrichtung (100), die dazu konfiguriert ist, auf mindestens zwei Trägern zu arbeiten, auf die durch eine Listen-Before-Talk-Prozedur, LBT-Prozedur, zugegriffen wird, wobei die erste Kommunikationsvorrichtung (100) angepasst ist zum:
- Durchführen synchronisierter LBT-Prozeduren unter Verwendung einer gleichen Startzeit und N-maliges Erkennen einer Leistung, wobei N eine Vielzahl von Malen angibt, die eine LBT-Prozedur auf jedem der mindestens zwei Träger freie Leerlaufschlitze erkennen muss, bevor sie auf einen Träger zugreift; und
- Zugreifen auf die Träger basierend auf dem Ergebnis der synchronisierten LBT-Prozeduren, wobei die LBT-Prozeduren auf jedem Träger den gleichwertigen zufälligen Back-Off-Wert, N, anwenden, um den Zugriff auf die jeweiligen Träger, auf denen die LBT-Prozeduren durchgeführt werden, zu synchronisieren.

## Revendications

1. Procédé pour faire fonctionner un premier dispositif de communication (100) dans un système de communication sans fil, le premier dispositif de communication (100) étant configuré pour fonctionner sur au moins deux porteuses auxquelles on accède par une procédure d'écoute avant de parler, LBT, le procédé comprend :
- la mise en œuvre (S1) de procédures LBT synchronisées en utilisant un même moment de début et en détectant une puissance N fois, dans lequel N indique une pluralité de fois qu'une procédure LBT doit détecter des créneaux inactifs dégagés avant d'accéder à une porteuse, sur chacune des au moins deux porteuses ; et
- l'accès (S2) aux porteuses sur la base du résultat des procédures LBT synchronisées, dans lequel les procédures LBT sont synchronisées en utilisant une valeur identique ou égale de délai d'attente aléatoire, N.

2. Premier dispositif de communication (100) configuré pour fonctionner sur au moins deux porteuses auxquelles on accède par une procédure d'écoute avant de parler, LBT, le premier dispositif de communication (100) est conçu pour :
- mettre en œuvre des procédures LBT synchronisées en utilisant un même moment de début et en détectant une puissance N fois, dans lequel N indique une pluralité de fois qu'une procédure LBT doit détecter des créneaux inactifs dégagés avant d'accéder à une porteuse, sur chacune des au moins deux porteuses ; et
- accéder aux porteuses sur la base du résultat des procédures LBT synchronisées, dans lequel les procédures LBT sur chaque porteuse appliquent une valeur égale de délai d'attente aléatoire, N, pour synchroniser l'accès des porteuses respectives sur lesquelles les procédures LBT sont mises en œuvre.
